# FASCICULE DE BREVET EUROPEEN

(11) **EP 3 737 603 B1**
(45) Date de publication et mention de la délivrance du brevet: **25.01.2023**
(21) Numéro de dépôt: 18833692.9
(22) Date de dépôt: 13.12.2018
(51) Int. Cl.: B62D 25/04, B62D 25/02

(54) **RENFORT DE LONGERON INFÉRIEUR D'UNE ARMATURE DE CAISSE D'UN VÉHICULE AUTOMOBILE, CONFIGURE POUR L'ANCRAGE SÉLECTIF D'UNE PLURALITÉ D'ACCESSOIRES**
VERSTÄRKUNGSSELEMENT EINES TIEFEREN HOHLTRÄGERS EINES FZG-RAHMENS, AUSGELEGT UM VERSHIEDENE NEBENAGGREGATE ZU VERANKERN
LOWER SILL REINFORCEMENT PART OF A BODYSHELL OF A VEHICLE CONFIGURED FOR SELECTIVE ANCHORING A PLURALITY OF ACCESSORIES

(30) Priorité: 09.01.2018 FR 1850177
(43) Date de publication de la demande: 18.11.2020
(73) Titulaire: PSA Automobiles SA, 78300 Poissy (FR)
(72) Inventeur: LEFEVRE, Eric, 91470 Limours (FR); ROBERT, Cedric, 70400 Hericourt (FR)
(86) Numéro de dépôt international: PCT/FR2018/053258
(87) Numéro de publication internationale: WO 2019/138165

(56) Documents cités:
- WO-A1-2016/066911
- DE-A1-102015 014 644
- FR-A1- 2 905 111
- JP-A- 2009 107 366
- JP-U- H0 535 552

## Description

La présente invention relève du domaine des modalités de renfort d'une armature de caisse d'un véhicule automobile, notamment en torsion. L'invention porte plus spécifiquement sur un renfort de longeron configuré pour renforcer un longeron inférieur que comprend ladite armature de caisse.

Une armature de caisse d'un véhicule automobile comprend communément un assemblage entre une ossature supérieure et une ossature inférieure. Les ossatures sont essentiellement chacune formées de longerons reliés entre eux par des traverses. L'ossature supérieure ménage une charpente pour la toiture du véhicule et l'ossature inférieure ménage une base roulante.

Les ossatures sont reliées entre elles via des montants latéraux. Chaque jeu de montants latéraux comprend au moins un montant de baie de parebrise et un montant arrière, voire aussi un montant médian longitudinalement interposé entre eux. Les montants latéraux de chacun des jeux sont ainsi longitudinalement reliés entre eux via des longerons constitutifs des ossatures.

L'armature de caisse est typiquement renforcée à l'encontre de sa déformation générale, notamment en torsion. L'armature de caisse est aussi localement renforcée à l'encontre d'efforts qu'elle est susceptibles de subir par suite de l'installation d'accessoires du véhicule sur divers composants de l'armature de caisse, tels que notamment les longerons et les montants.

L'armature de caisse est alors renforcée par des éléments de renfort. Plus spécifiquement dans le cadre de la présente invention, des renforts de longeron sont implantés le long des longerons que comprend l'armature de caisse, tel qu'il ressort par exemple du document FR 2 905 111 (PEUGEOT CITROEN AUTOMOBILES SA) concernant le renfort d'un longeron inférieur.

Par ailleurs les véhicules automobiles comportent classiquement des ouvertures latérales d'accès à l'habitacle du véhicule, qui sont ménagées entre deux dits montants latéraux longitudinalement voisins. Des portes latérales sont alors installées sur l'armature de caisse pour autoriser en position d'ouverture un accès à l'habitacle via lesdites ouvertures, ou inversement interdire un tel accès en position de fermeture de la porte.

Les portes latérales sont couramment agencées en volet articulé sur l'armature de caisse, via l'un des montants qu'elle comprend, ou en porte coulissante longitudinalement qui est montée sur l'armature de caisse via des rails de guidage. Un tel rail de guidage est couramment installé le long dudit longeron inférieur que comprend l'armature de caisse.

Dans ce contexte, il est opportun de standardiser l'armature de caisse d'une même gamme de véhicules pour diminuer les coûts d'obtention des divers modèles de véhicule relevant de cette même gamme de véhicule. Autrement dit, il est opportun de développer une armature de caisse commune à divers modèles de véhicules d'une même gamme de véhicules, tout en prévoyant selon les besoins son aménagement spécifique à un modèle de véhicule donné.

Il est plus particulièrement opportun de rechercher une armature de caisse apte à recevoir des accessoires communs à divers modèles de véhicules d'une même gamme de véhicules, et/ou inversement apte à autoriser l'installation sélective sur cette armature de caisse d'accessoires propres auxdits modèles.

La présente invention s'inscrit dans un tel cadre de recherche. Plus spécifiquement, la présente invention vise à proposer une armature de caisse d'un véhicule automobile apte sélectivement à recevoir ou non une porte latérale agencée en porte coulissante longitudinalement selon le modèle de véhicule d'une même gamme de véhicule, et apte à recevoir au moins un accessoire commun auxdits divers modèles de véhicule.

Dans ce contexte, l'invention a pour objet une armature de caisse d'un véhicule automobile pourvue d'un ensemble d'éléments de carrosserie comprenant un longeron inférieur solidaire au moins d'un montant arrière et équipé d'un renfort de longeron.

Il est si besoin précisé certaines notions relatives qui sont communément admises dans le domaine automobile pour décrire un véhicule automobile et/ou ses composants. Les directions d'extension d'un véhicule sont communément définies dans un repère orthonormé identifié suivant une direction longitudinale, une direction transversale et une direction verticale.

Dans le contexte de l'invention, de telles directions et les notions relatives afférentes sont appliquées à l'armature de caisse et/ou à ses composants, notamment le longeron inférieur, le renfort de longeron et le montant.

La notion de longitudinal est typiquement considérée entre l'avant et l'arrière du véhicule, par rapport à la station du conducteur qui fait face à la direction d'avancement vers l'avant du véhicule. Le véhicule s'étend verticalement, ou autrement dit en élévation, perpendiculairement à son plan de roulage au sol. Par suite, les notions inférieur et supérieur, ou autres notions apparentées comme base et sommet par exemple, sont des notions relatives considérées au regard de la notion de verticalité par rapport au plan de roulage du véhicule. Le véhicule s'étend transversalement entre les côtés latéraux droit et gauche du véhicule considérés par rapport au conducteur en station de conduite du véhicule.

Ainsi dans le contexte de l'ensemble d'éléments de carrosserie d'une armature de caisse relevant de l'invention, le longeron inférieur s'étend longitudinalement à la base de l'armature de caisse et le renfort de longeron s'étend au moins en partie le long du longeron. Le montant arrière est typiquement un élément de carrosserie s'étendant verticalement en zone arrière de l'armature de caisse depuis le longeron inférieur duquel le montant arrière est solidaire.

Comme précédemment visé, l'armature de caisse d'un véhicule automobile de l'invention est pourvue d'un ensemble d'éléments de carrosserie comprenant un longeron inférieur solidaire au moins d'un montant arrière et équipé d'un renfort de longeron.

Conformément à l'invention, une telle armature de caisse est reconnaissable en ce que l'extrémité arrière du renfort de longeron est fixée contre le montant arrière en s'étendant en élévation au moins jusqu'à une zone de fixation d'un enrouleur d'une ceinture de sécurité au montant arrière. L'extrémité arrière du renfort de longeron forme un premier renfort du montant arrière et est pourvue d'une interface de fixation dudit enrouleur au renfort de longeron via son extrémité arrière.

Autrement dit, le renfort de longeron comprend un premier composant qui s'étend classiquement longitudinalement le long du longeron en étant fixé à ce dernier. Le renfort de longeron comprend aussi un deuxième composant qui est solidaire dudit premier composant en étant ménagé à l'extrémité arrière du renfort de longeron, et qui s'étend en élévation suivant l'extension du montant en étant fixé à ce dernier.

Le deuxième composant du renfort de longeron, formé par son extrémité arrière, s'étend en élévation jusqu'à une zone supérieure du montant arrière à laquelle ledit enrouleur est typiquement positionné et fixé au montant arrière via au moins une interface de fixation, dont au moins ladite interface de fixation de l'enrouleur équipant l'extrémité arrière du renfort de longeron.

La dimension d'extension en élévation de l'extrémité arrière du renfort de longeron est ainsi identifiée entre le bord inférieur du renfort de longeron considéré à son extrémité arrière et au moins la zone du montant arrière dédiée à la fixation dudit enrouleur.

Le renfort de longeron, qui est fixé au montant arrière via son extrémité arrière, est alors pourvu de ladite interface de fixation dont il est équipé pour fixer l'enrouleur au montant arrière.

Si besoin de préciser, une interface de fixation est une notion couramment utilisée en mécanique pour désigner par exemple un organe et/ou un aménagement localisé d'une pièce mécanique, qui est configuré pour l'installation et la fixation d'un élément extérieur sur la pièce mécanique. La fixation de l'élément extérieur sur la pièce mécanique est réalisée via un moyen de fixation, par exemple agencé en organe fileté, tel qu'une vis ou un boulon, en organe d'emboîtement, en attache telle que par exemple du type par rivetage, ou encore par scellement.

Les modalités de fixation potentielle de l'enrouleur au montant arrière, via le renfort de longeron, sont ainsi communes à plusieurs modèles de véhicules d'une même gamme de véhicules. Une telle diversité de dits modèles de véhicule relève notamment et à titre d'exemple d'un véhicule personnel, y compris en version classique ou en version coupée, ou un véhicule utilitaire, et/ou encore un véhicule susceptible d'être équipé d'une porte agencée en volet ou un véhicule équipé d'une porte coulissante.

En outre, le caractère unitaire du corps formant le renfort de longeron et comprenant ledit premier composant et le dit deuxième composant ne fait pas obstacle à son installation à l'intérieur de l'espace ménagé entre les peaux respectivement intérieure et extérieure d'habillage latéral de l'armature de caisse, et cela quel que soit le modèle du véhicule.

De préférence, l'extrémité arrière du renfort de longeron et/ou le montant arrière sont en outre équipés d'au moins une, et préférentiellement de plusieurs, interfaces de fixation avec au moins un accessoire participant d'une installation sur l'armature de caisse d'une porte coulissante.

Les interfaces de fixation au montant arrière, via le renfort de longeron, d'accessoires affectés à l'installation sur l'armature de caisse d'une porte coulissante, notamment au regard de son montage et/ou au fonctionnement sur l'armature de caisse, peuvent être sélectivement utilisées selon le modèle du véhicule, sans pour autant faire obstacle à l'aménagement particulier d'un modèle de véhicule dépourvu de porte coulissante.

De tels accessoires affectés à l'installation de la porte coulissante sur l'armature de caisse comprennent notamment, à titre non exclusif, au moins une gâche de verrouillage et/ou un organe de positionnement de la porte coulissante en position de fermeture sur l'armature de caisse, et/ou encore un organe de blocage en position de fermeture d'une trappe d'accès à un réservoir de carburant dont l'ouverture est souhaitée interdite lorsque la porte coulissante est en position d'ouverture vers l'arrière de l'armature de caisse.

Ainsi selon une forme de réalisation, l'extrémité arrière du renfort de longeron est en outre pourvue d'une interface de fixation au renfort de longeron d'un organe de positionnement d'une porte coulissante en position de fermeture.

Ainsi encore selon une forme de réalisation, l'extrémité arrière du renfort de longeron est en outre pourvue d'une interface de fixation au renfort de longeron d'un organe de blocage en position de fermeture d'une trappe d'accès à un réservoir de carburant.

La trappe est notamment installée en surplomb d'un passage de roue arrière ménagé par l'armature de caisse. Dès lors, l'extrémité arrière du renfort de longeron s'étend en élévation au moins conformément à un seuil longitudinal de surplomb du passage de roue. En outre, pour favoriser le logement du renfort de longeron entre les dites peaux d'habillage des côtés latéraux de l'armature de caisse, quel que soit le modèle de véhicule, la base du renfort longeron s'étend de préférence en bordure du passage de roue arrière.

Ainsi selon une forme de réalisation, la base de l'extrémité arrière du renfort de longeron s'étend en élévation en bordure d'un passage de roue arrière ménagée par l'armature de caisse.

Selon une forme de réalisation, l'extrémité arrière du renfort de longeron présente à sa partie supérieure un bord d'accostage avec un deuxième renfort du montant arrière apte à être disposé en prolongement de l'extrémité arrière du renfort de longeron via ledit bord d'accostage.

Ainsi selon l'extension en élévation du montant arrière, ledit bord d'accostage de l'extrémité arrière du renfort de longeron peut être sélectivement utilisé ou non pour l'implantation d'un deuxième renfort de montant arrière d'extension prédéfinie, en fonction du modèle de véhicule et plus spécifiquement en fonction de l'élévation du montant arrière propre à un modèle de véhicule donné.

Il est ainsi compris que la dimension d'extension en élévation de l'extrémité arrière du renfort de longeron est de préférence au plus égale à la dimension d'extension en élévation du montant arrière de l'armature de caisse d'un modèle véhicule présentant une dimension en élévation la plus faible parmi les armatures de caisse que comprennent respectivement les divers modèles de véhicules d'une même gamme de véhicules.

Selon une forme de réalisation, le renfort de longeron est en outre pourvu d'une interface de fixation entre le longeron inférieur et un rail inférieur de guidage longitudinal de la porte coulissante.

La porte coulissante est ainsi guidée en translation via au moins ledit rail inférieur entre sa position de fermeture et sa position d'ouverture. Il est compris qu'un tel rail est sélectivement installé sur l'armature de caisse pour un modèle de véhicule équipé d'une porte coulissante.

Selon une forme de réalisation, la base de l'extrémité arrière du renfort de longeron comporte au moins une fenêtre de passage d'un câblage électrique.

Une telle fenêtre autorise le passage d'un potentiel dit câblage électrique susceptible d'équiper l'un au moins des modèles de véhicule d'une même gamme de véhicules, et cela malgré le caractère unitaire du longeron de renfort comprenant ledit premier composant et ledit deuxième composant.

Selon une forme de réalisation, au moins le montant arrière est pourvu d'une interface de fixation d'une gâche de verrouillage de la porte coulissante en position de fermeture.

Selon une forme potentielle de réalisation, l'extrémité arrière du renfort de longeron est susceptible de s'étendre en élévation jusqu'à la zone de fixation de la gâche sur le montant arrière.

De préférence dans ce cas, l'extrémité arrière du renfort de longeron est en outre pourvue d'une interface de fixation de la gâche au renfort de longeron, en complément de la fixation de la gâche au montant arrière via l'interface de fixation dont il est équipé.

Plus spécifiquement, le renfort de longeron comprend une première branche formant ledit premier composant du renfort de longeron et une deuxième branche formant ledit deuxième composant du renfort de longeron.

La première branche et la deuxième branche sont solidaires l'une de l'autre en composant avantageusement une pièce unitaire monobloc. Une telle pièce unitaire d'une part accroît le renforcement de l'armature de caisse par le renfort de longeron à l'encontre des efforts en torsion, et d'autre part facilite la manipulation en un seul bloc du renfort de longeron, notamment pour son installation sur l'armature de caisse.

Ainsi plus spécifiquement, le renfort de longeron comprend une première branche qui est fixée contre le longeron inférieur et une deuxième branche qui prolonge en élévation la première branche à son extrémité arrière et qui est fixée au montant arrière. La deuxième branche et au moins une partie arrière de la première branche composent une pièce unitaire monobloc.

L'invention a aussi pour un véhicule automobile équipé d'une armature de caisse conforme à l'invention.

Dans le cadre de l'invention, il est à relever parmi les possibilités offertes par l'invention :
-) que l'une au moins des interfaces de fixation équipant l'un au moins des renforts de longeron droit et/ou gauche, sont susceptibles d'être exploitées ou non selon le modèle du véhicule d'une même gamme de véhicules.
-) que l'un au moins des renforts de longeron droit et/ou gauche, est équipé de l'interface de fixation dudit enrouleur et est potentiellement équipé de l'une quelconque au moins des dites interfaces de fixation subsidiairement visées par l'invention. De préférence, chacun des renforts de longeron droit et/ou gauche est équipé de l'interface de fixation dudit enrouleur et de l'une au moins des mêmes interfaces de fixation subsidiairement visées par l'invention.
-) que l'une au moins, de préférence la totalité, des interfaces de fixation dont sont pourvus l'un au moins des renforts de longeron droit et/ou gauche, sont avantageusement intégrées au renfort de longeron lors de sa fabrication.
-) que la dotation de l'une au moins des interfaces de fixation à l'un au moins des renforts de longeron droit et/ou gauche, n'exclue pas une fixation de l'accessoire qui lui est affecté conjointement au renfort de longeron et au montant arrière. Dans ce cas, le montant arrière est à cet effet de préférence équipé d'une interface de fixation qui lui est aussi affectée pour la fixation de l'accessoire.
-) que nonobstant la dotation de l'interface de fixation d'un dit enrouleur à chacun des renforts de longeron droit et/ou gauche, l'interface de fixation de l'enrouleur à l'un quelconque des renforts de longeron droit ou gauche peut être exploitée sans pour autant impliquer une exploitation de l'interface de fixation de l'enrouleur de l'autre des renforts de longerons droit ou gauche.
-) que nonobstant la dotation à l'un au moins des renforts de longeron droit et/ou gauche de l'une au moins des interfaces de fixation affectées aux accessoires dédiés à l'installation de la porte coulissante sur l'armature de caisse, une armature de caisse conforme à l'invention est susceptible d'être équipée ou d'être exempt d'au moins une porte coulissante susceptible d'être installée au côté gauche et/ou au côté droit.
-) qu'il est à tenir compte de l'installation habituelle d'une dite trappe uniquement au côté droit ou au côté gauche d'un véhicule. Dans ce contexte, seule l'interface de fixation d'un dit organe de blocage de la trappe équipant le montant arrière et/ou le renfort de longeron situés au même côté du véhicule que celui équipé de la trappe peut être exploitée, tandis que l'interface de fixation d'un dit organe de blocage de la trappe équipant le montant arrière et/ou le renfort de longeron situés de l'autre côté du véhicule n'est pas exploitée.

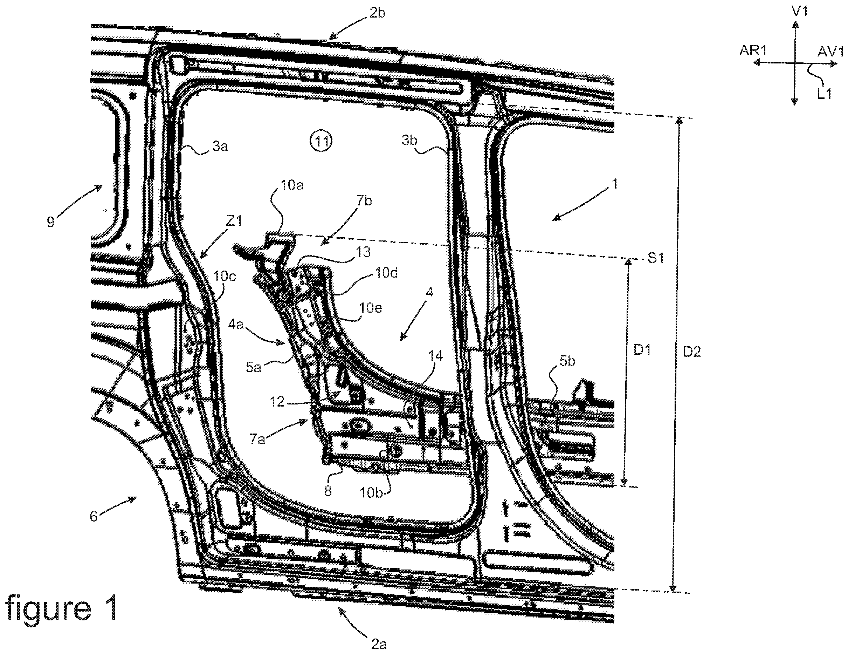

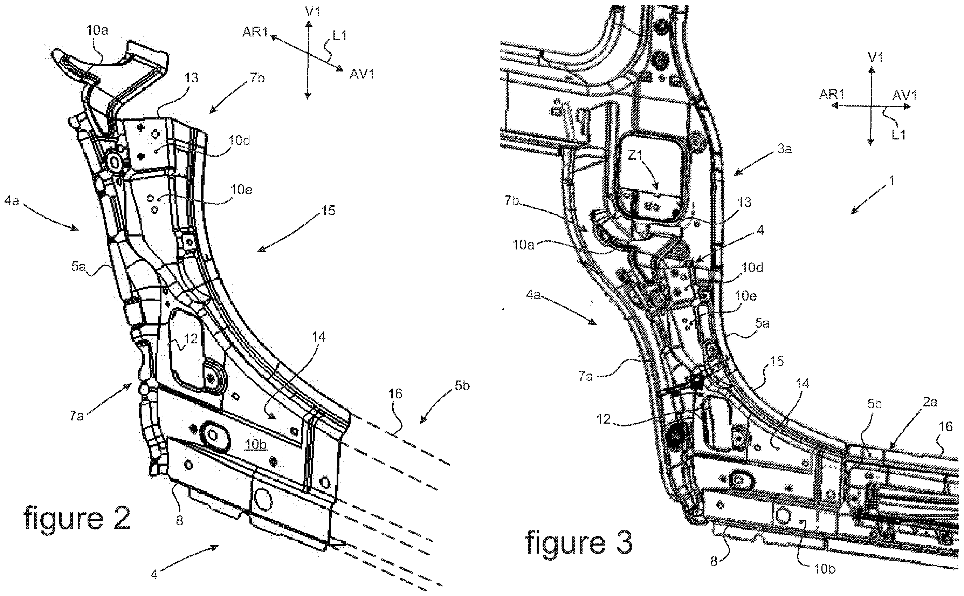

Des exemples de réalisation de la présente invention vont être décrits en relation avec les figures des planches annexées, dans lesquelles :
-) la figure 1 est une illustration en perspective latérale partielle éclatée d'un premier exemple d'une armature de caisse conforme à l'invention.
-) la figure 2 est une illustration en perspective d'un exemple de réalisation d'un renfort de longeron inférieur de l'invention participant de l'armature de caisse représentée sur la figure 1.
-) la figure 3 est une illustration partielle de côté d'un deuxième exemple d'une armature de caisse conforme à l'invention, équipée du renfort de longeron représenté sur la figure 2.

Les figures et leurs descriptions détaillées exposent l'invention selon des modalités particulières qui ne sont pas restrictives quant à la portée de l'invention telle que définie par les revendications. Les figures et leurs descriptions détaillées peuvent servir à mieux définir l'invention, si besoin en relation avec la description générale qui vient d'en être faite.

Sur la figure 1, un côté latéral d'une armature de caisse 1 d'un véhicule automobile s'étend d'avant AV1 en arrière AR1 suivant une direction longitudinale L1, et s'étend suivant une direction verticale V1 ou autrement dit une direction en élévation. Chacun des côtés latéraux de l'armature de caisse 1 comprend un longeron inférieur 2a et un longeron supérieur 2b entretoisés en élévation par des montants 3a, 3b solidarisés aux longerons 2a, 2b, dont un montant arrière 3a.

Le longeron inférieur 2a est muni d'un renfort de longeron 4 dont l'extrémité arrière 4a est orientée vers l'arrière AR1. Le renfort de longeron 4 comprend une première branche 5b qui s'étend longitudinalement L1 et qui est fixée contre le longeron inférieur 2a. L'extrémité arrière 4a du renfort de longeron 4, et donc de la première branche 5b, est configurée pour être accostée à un passage de roue 6 arrière AR1 ménagé par l'armature de caisse 1.

Sur les figures 1 à 3, l'extrémité arrière 4a du renfort de longeron 4 est formée d'une deuxième branche 5a qui s'étend en élévation V1 en prolongement de la première branche 5b. Ainsi, la partie d'accostage du renfort de longeron 4 contre le passage de roue 6 arrière AR1 est ménagée par la base 7a de la deuxième branche 5a, qui s'étend en élévation V1 jusqu'à au moins une zone Z1 de fixation d'un enrouleur d'une ceinture de sécurité au montant arrière 3a.

A titre indicatif, l'extrémité arrière 4a du renfort de longeron 4 formée par la deuxième branche 5a s'étend en élévation V1 depuis son bord inférieur 8 suivant une dimension D1 de positionnement de son extrémité supérieure 7b à un seuil S1 longitudinal L1 de surplomb du passage de roue 6.

Plus particulièrement à titre illustratif sur les figures 1 et 3 et selon les exemples de réalisation représentés, la dimension D1 d'extension de l'extrémité arrière 4a du renfort de longeron 4 depuis son bord inférieur 8 est de l'ordre de la moitié de la dimension D2 en élévation V1 du montant arrière 4a. L'extrémité supérieure 7b de l'extrémité arrière 4a du renfort de longeron 4 est ainsi positionnée suivant ledit seuil S1 entre le passage de roue 6 et par exemple un dégagement 9 ménagé par l'armature de caisse 1 pour la réception d'un vitrage.

L'extrémité arrière 4a du renfort de longeron 4 est munie à son sommet d'une première interface de fixation 10a de l'enrouleur, par exemple agencée en support de l'enrouleur, qui est ménagée dans la partie supérieure de l'extrémité arrière 4a du renfort de longeron 4 et qui est placée dans ladite zone Z1 de fixation de l'enrouleur au montant arrière 3a.

Par ailleurs, le renfort de longeron 4 est muni de plusieurs interfaces de fixation dédiées à la fixation sur le renfort de longeron 4 de divers accessoires affectés à une porte coulissante. Typiquement, une telle porte coulissante est manoeuvrable en translation le long d'un côté latéral de l'armature de caisse 1, entre une position d'ouverture et une position de fermeture. En position d'ouverture vers l'arrière AR1, la porte coulissante dégage un accès à l'habitacle du véhicule à travers une ouverture 11 ménagée entre les longerons 2a, 2b et deux montants 3a, 3b voisins de l'armature de caisse 1. Inversement en position de fermeture vers l'avant AV1, la porte coulissante ferme l'ouverture 11 en interdisant ledit accès.

A cet effet, la porte coulissante est guidée en translation le long de l'armature de caisse 1 via des rails montés sur l'armature de caisse 1, dont notamment un rail inférieur fixé au longeron inférieur 2a. Le renfort de longeron 4 participe à la fixation du rail inférieur au longeron inférieur 2a, en comportant au moins une deuxième interface de fixation 10b du rail inférieur qui est ménagée sur la première branche 5b.

Par ailleurs comme visible sur la figure 1, au moins le montant arrière 3a est potentiellement muni d'une interface de fixation 10c d'une gâche de verrouillage de la porte coulissante en position de fermeture. Dans ce cas, L'extrémité arrière 4a du renfort de longeron 4 est aussi susceptible d'être équipée d'une troisième interface de fixation de ladite gâche alors ménagée au regard de celle équipant le montant arrière 3a.

L'extrémité arrière 4a du renfort de longeron 4 est aussi munie d'une quatrième interface de fixation 10d au renfort de longeron 4, d'un organe de positionnement de la porte coulissante en position de fermeture.

L'extrémité arrière 4a du renfort de longeron 4 est aussi munie d'une cinquième interface de fixation 10e au renfort de longeron 4 d'un organe de blocage en position de fermeture d'une trappe d'accès à un réservoir de carburant. L'organe de blocage est notamment configuré pour interdire une ouverture de la trappe lorsque la porte coulissante est placée vers l'arrière AR1 de l'armature de caisse 1 en position d'ouverture.

En outre, la base 7a de l'extrémité arrière 4a du renfort de longeron 4 comporte au moins une fenêtre 12 de passage d'un câblage électrique, qui est ménagée en surplomb du longeron inférieur 2a. Ainsi, l'extension en élévation V1 de l'extrémité arrière 4a du renfort de longeron 4 et la continuité du renfort de longeron 4 entre sa première branche 5b longitudinale L1 et sa deuxième branche 5a verticale V1 ne fait pas obstacle au passage du câblage électrique entre l'intérieur et l'extérieur de l'armature de caisse 1 à travers la fenêtre 12.

L'extrémité arrière 4a du renfort de longeron 4 présente à sa partie supérieure un bord d'accostage 13 avec un deuxième renfort du montant arrière 3a prévu de prolonger au besoin l'extrémité arrière 4a du renfort de longeron 4 jusqu'à la zone de jonction du montant arrière 3a au longeron supérieur 2b de l'armature de caisse 1.

Une partie arrière 14 de la première branche 5b forme avec la deuxième branche 5a une portion arrière du renfort de longeron 4 procurant son accostage entre d'une part le passage de roue 6 arrière AR1 et d'autre part le bord du montant arrière 3a et le bord du longeron inférieur 2a, au moins à sa partie arrière AR1, qui délimitent ladite ouverture 11.

La deuxième branche 5a et au moins la partie arrière 14 de la première branche 5a composent avantageusement une pièce unitaire 15 monobloc comme par exemple représentée isolée sur la figure 2. En d'autres termes, la pièce unitaire 15 comprend la deuxième branche 5a et en tout ou partie la première branche 5b, dont au moins la partie arrière 14 de la première branche 5b. Il est ainsi compris que la pièce unitaire 15 est susceptible d'être diversement composée selon des formes respectives de réalisation.

Selon une forme de réalisation, la pièce unitaire 15 est composée de la deuxième branche 5a et de la partie arrière 14 du renfort de longeron 4 comme illustré sur la figure 2. Dans ce cas, la pièce unitaire 15 est accostée à un prolongement 16 du renfort de longeron 4, qui participe de la première branche 5b et qui s'étend longitudinalement L1 vers l'avant AV1 depuis la pièce unitaire 15.

L'accostage entre la pièce unitaire 15 et le prolongement 16 du renfort de longeron 4 est de préférence complété par une solidarisation entre la pièce unitaire 15 et le prolongement 16 du renfort de longeron 4, tel que par soudage. La pièce unitaire 15 et le prolongement 16 du renfort de longeron 4 forment alors un corps unitaire monobloc. Une telle opération de soudage est susceptible d'être réalisée préalablement ou postérieurement à l'installation des composants du renfort de longeron 4 sur le longeron inférieur 2a.

Selon une autre forme de réalisation, la pièce unitaire 15 est composée de la deuxième branche 5a et de la première branche 5b en formant conjointement la totalité du renfort de longeron 4.

Ladite pièce unitaire 15 renforce la résistance de l'armature de caisse 1 à l'encontre des efforts en torsion, en complément de celle procurée par la première branche 5b seule, en raison de l'extension conséquente en élévation de l'extrémité arrière 4a du renfort de longeron 4 qui forme alors un renfort du montant arrière 3a solidaire du renfort de longeron 4.

## Revendications

1. Armature de caisse (1) d'un véhicule automobile pourvue d'un ensemble d'éléments de carrosserie comprenant un longeron inférieur (2a) solidaire au moins d'un montant arrière (3a) et équipé d'un renfort de longeron (4), **caractérisée en ce que** l'extrémité arrière (4a) du renfort de longeron (4) est fixée contre le montant arrière (3a) en s'étendant en élévation (V1) au moins jusqu'à une zone (Z1) de fixation d'un enrouleur d'une ceinture de sécurité au montant arrière (3a), l'extrémité arrière (4a) du renfort de longeron (4) formant un premier renfort du montant arrière (3a) et étant pourvue d'une interface de fixation (10a) dudit enrouleur au renfort de longeron (4) via son extrémité arrière (4a).

2. Armature de caisse (1) selon la revendication 1, **caractérisée en ce que** l'extrémité arrière (4a) du renfort de longeron (4) est en outre pourvue d'une interface de fixation (10d) au renfort de longeron (4) d'un organe de positionnement d'une porte coulissante en position de fermeture.

3. Armature de caisse (1) selon l'une quelconque des revendications 1 à 2, **caractérisée en ce que** l'extrémité arrière (4a) du renfort de longeron (4) est en outre pourvue d'une interface de fixation (10e) au renfort de longeron (4) d'un organe de blocage en position de fermeture d'une trappe d'accès à un réservoir de carburant.

4. Armature de caisse (1) selon l'une quelconque des revendications 1 à 3, **caractérisée en ce que** la base (7a) de l'extrémité arrière (4a) du renfort de longeron (4) s'étend en élévation (V1) en bordure d'un passage de roue (6) arrière (AR1) ménagée par l'armature de caisse (1).

5. Armature de caisse (1) selon l'une quelconque des revendications 1 à 4, **caractérisée en ce que** l'extrémité arrière (4a) du renfort de longeron (4) présente à sa partie supérieure un bord d'accostage (13) avec un deuxième renfort du montant arrière (3a) apte à être disposé en prolongement de l'extrémité arrière (4a) du renfort de longeron (4), via ledit bord d'accostage (13).

6. Armature de caisse (1) selon l'une quelconque des revendications 2 à 5, **caractérisée en ce que** le renfort de longeron (4) est en outre pourvu d'une interface de fixation (10b) entre le longeron inférieur (2a) et un rail inférieur de guidage longitudinal de la porte coulissante.

7. Armature de caisse (1) selon l'une quelconque des revendications 1 à 6, **caractérisée en ce que** la base (7a) de l'extrémité arrière (4a) du renfort de longeron (4) comporte au moins une fenêtre (12) de passage d'un câblage électrique.

8. Armature de caisse (1) selon l'une quelconque des revendications 2 à 7, **caractérisée en ce qu'**au moins le montant arrière (3a) est pourvu d'une interface de fixation (10c) d'une gâche de verrouillage de la porte coulissante en position de fermeture.

9. Armature de caisse (1) selon l'une quelconque des revendications 1 à 8, **caractérisée en ce que** le renfort de longeron (4) comprend une première branche (5b) qui est fixée contre le longeron inférieur (2a) et une deuxième branche (5a) qui prolonge en élévation (V1) la première branche (5b) à son extrémité arrière (4a) et qui est fixée au montant arrière (3a), la deuxième branche (5a) et au moins une partie arrière (14) de la première branche (5b) composant une pièce unitaire (15) monobloc.

10. Véhicule automobile équipé d'une armature de caisse (1) conforme à l'une quelconque des revendications 1 à 9.

## Patentansprüche

1. Karosseriebeschlag (1) eines Kraftfahrzeugs mit einer Karosserieelementenanordnung mit einem unteren Holm (2a), der mit mindestens einem hinteren Holm (3a) fest verbunden ist und mit einer Holmverstärkung (4) versehen ist, **dadurch gekennzeichnet, dass** das hintere Ende (4a) der Holmverstärkung (4) an dem hinteren Holm (3a) befestigt ist, indem es sich in einer Höhe (V1) mindestens bis zu einem Bereich (Z1) zur Befestigung eines Gurtaufrollers an dem hinteren Holm (3a) erstreckt, wobei das hintere Ende (4a) der Verstärkung eine erste Verstärkung des hinteren Holms (3a) bildenden Holms (4), der über sein hinteres Ende (4a) mit einer Befestigungsschnittstelle (10a) für den Holm an der Holm-Verstärkung (4) versehen ist.

2. Karosseriebeschlag (1) nach Anspruch 1, **dadurch gekennzeichnet, dass** das hintere Ende (4a) der Holmverstärkung (4) ferner mit einer Befestigungsschnittstelle (10d) an der Holmverstärkung (4) eines Organs zur Positionierung einer Schiebetür in der Schließstellung versehen ist.

3. Wagenkastengestell (1) nach einem der Ansprüche 1 bis 2, **dadurch gekennzeichnet, dass** das hintere Ende (4a) der Längsträger-Verstärkung (4) ferner mit einer Befestigungsschnittstelle (10e) an der Längsträger-Verstärkung (4) eines Blockierorgans in der Schließstellung einer Zugangsklappe zu einem Kraftstofftank versehen ist.

4. Wagenkastengestell (1) nach einem der Ansprüche 1 bis 3, **dadurch gekennzeichnet, dass** die Basis (7a) des hinteren Endes (4a) der Längsträgerverstärkung (4) sich in einer Erhebung (V1) am Rand eines hinteren Raddurchgangs (6) (AR1) erstreckt, der durch das Wagenkastengestell (1) gebildet ist.

5. Wagenkastenrahmen (1) nach einem der Ansprüche 1 bis 4, **dadurch gekennzeichnet, dass** das hintere Ende (4a) der Längsträger-Verstärkung (4) an seinem oberen Teil eine Andockkante (13) mit einer zweiten Verstärkung des hinteren Pfostens (3a) aufweist, die in Verlängerung des hinteren Endes (4a) der LängsträgerVerstärkung (4) über die Andockkante (13) angeordnet werden kann.

6. Wagenkastengestell (1) nach einem der Ansprüche 2 bis 5, **dadurch gekennzeichnet, dass** die Holmverstärkung (4) ferner mit einer Befestigungsschnittstelle (10b) zwischen dem unteren Holm (2a) und einer unteren Längsführungsschiene der Schiebetür versehen ist.

7. Karosseriebeschlag (1) nach einem der Ansprüche 1 bis 6, **dadurch gekennzeichnet, dass** die Basis (7a) des hinteren Endes (4a) der Längsträger-Verstärkung (4) mindestens ein Fenster (12) zum Durchgang einer elektrischen Verdrahtung aufweist.

8. Karosseriebeschlag (1) nach einem der Ansprüche 2 bis 7, **dadurch gekennzeichnet, dass** zumindest der hintere Ständer (3a) mit einer Befestigungsschnittstelle (10c) für einen Schließhaken der Schiebetür in Schließstellung versehen ist.

9. Wagenkastengestell (1) nach einem der Ansprüche 1 bis 8, **dadurch gekennzeichnet, dass** die Holmverstärkung (4) einen ersten Schenkel (5b), der an dem unteren Holm (2a) befestigt ist, und einen zweiten Schenkel (5a) umfasst, der den ersten Schenkel (5b) an seinem hinteren Ende (4a) in der Höhe (V1) verlängert und der an dem hinteren Holm (3a) befestigt ist, wobei der zweite Schenkel (5a) und mindestens ein hinterer Teil (14) des ersten Schenkels (5b) ein einstückiges einheitliches Teil (15) bilden.

10. Kraftfahrzeug, das mit einer Karosseriebewehrung (1) nach einem der Ansprüche 1 bis 9 ausgestattet ist.

## Claims

1. Body frame (1) of a motor vehicle provided with a body component assembly comprising a lower side member (2a) secured to at least one rear upright (3a) and equipped with a side member reinforcement (4), **characterized in that** the rear end (4a) of the side member reinforcement (4) is fixed against the rear upright (3a) and extends in elevation (V1) at least as far as a zone (Z1) for fixing a retractor of a seat belt to the rear upright (3a), the rear end (4a) of the side member reinforcement a longitudinal member (4) forming a first reinforcement of the rear upright (3a) and being provided with an interface (1 0a) for fixing said reel to the longitudinal member reinforcement (4) via its rear end (4a).

2. A body frame (1) according to claim 1, **characterized in that** the rear end (4a) of the spar reinforcement (4) is further provided with an interface (10d) for fastening to the spar reinforcement (4) a member for positioning a sliding door in the closed position.

3. A body frame (1) according to any one of claims 1 to 2, **characterized in that** the rear end (4a) of the spar reinforcement (4) is further provided with an interface (1 0e) for fixing to the spar reinforcement (4) a member for locking in the closed position of an access hatch to a fuel tank.

4. Body frame (1) according to one of Claims 1 to 3, **characterized in that** the base (7a) of the rear end (4a) of the side member reinforcement (4) extends in elevation (V1) at the edge of a rear wheel passage (6) (AR1) formed by the body frame (1).

5. Body frame (1) according to any one of claims 1 to 4, **characterized in that** the rear end (4a) of the spar reinforcement (4) has at its upper part a docking edge (13) with a second reinforcement of the rear upright (3a) able to be disposed in extension of the rear end (4a) of the spar reinforcement (4), via said docking edge (13).

6. A body frame (1) according to any one of claims 2 to 5, **characterized in that** the spar reinforcement (4) is further provided with a fastening interface (10b) between the lower spar (2a) and a lower longitudinal guide rail of the sliding door.

7. Body frame (1) according to any one of claims 1 to 6, **characterized in that** the base (7a) of the rear end (4a) of the spar reinforcement (4) comprises at least one window (12) for the passage of an electrical wiring.

8. Body frame (1) according to one of Claims 2 to 7, **characterized in that** at least the rear upright (3a) is provided with an interface (10c) for fastening a locking keeper for the sliding door in the closed position.

9. Body reinforcement (1) according to any one of claims 1 to 8, **characterized in that** the spar reinforcement (4) comprises a first leg (5b) which is fixed against the lower spar (2a) and a second leg (5a) which extends in elevation (V1) the first leg (5b) at its rear end (4a) and which is fixed to the rear upright (3a), the second leg (5a) and at least one rear part (14) of the first leg (5b) forming a unitary piece (15) in one piece.

10. Motor vehicle equipped with a body frame (1) according to any one of claims 1 to 9.
